# EUROPÄISCHE PATENTSCHRIFT

(11) **EP 4 505 870 B1**
(45) Veröffentlichungstag und Bekanntmachung des Hinweises auf die Patenterteilung: **04.03.2026**
(21) Anmeldenummer: 24188592.0
(22) Anmeldetag: 15.07.2024
(51) Int. Cl.: A01K 5/00, G05D 1/00, G05D 1/698, G05D 105/28, G05D 109/10, G05D 107/20

(54) **VERFAHREN ZUR BEFÜLLUNG EINES FUTTERMISCHWAGENS**
METHOD FOR FILLING A FEED MIXING WAGON
PROCÉDÉ DE REMPLISSAGE D'UN WAGON MÉLANGEUR DE FOURRAGE

(30) Priorität: 07.08.2023 DE 102023120908
(43) Veröffentlichungstag der Anmeldung: 12.02.2025
(73) Patentinhaber: Deere & Company, Moline, IL 61265 (US)
(72) Erfinder: Raste, Hrishikesh, Mannheim (DE); Yande, Sarange, Mannheim (DE)
(74) Vertreter: Holst, Sönke

(56) Entgegenhaltungen:
- EP-A1- 2 204 088
- EP-A1- 3 242 550
- EP-A1- 3 756 457
- DE-A1- 102018 100 534

## Beschreibung

Die vorliegende Erfindung bezieht sich auf ein Verfahren zur Befüllung eines Futtermischwagens.

### Stand der Technik

In der Landwirtschaft wird in heutigen Zeiten nicht nur der Anbau von Pflanzen und deren Ernte mit hochtechnisierten Mitteln durchgeführt, sondern auch die Bereitstellung von Futter für Tiere. Hierzu finden so genannte Futtermischwagen Verwendung, die einen üblicherweise nach oben offenen Behälter umfassen, in den sukzessive verschiedene Bestandteile des Futters eingefüllt werden. Innerhalb des Behälters ist eine Mischeinrichtung angeordnet, in der Regel in Form einer konischen Schnecke, die einerseits zum Durchmischen, andererseits in einem gewissen Maße auch zum Zerkleinern des Futters dient. Hierzu sei beispielsweise auf die Offenbarung der DE 20 2016 106 837 U1 verwiesen. Der Futtermischwagen wird nach dem Beladen und dem Mischen und Zerkleinern des Futters zum Standort oder Fütterungsplatz der Tiere verbracht, wo das Futter entladen wird.

Die Beladung des gezogenen oder selbstfahrenden Futtermischwagens erfolgt üblicherweise durch eine Ladeeinrichtung, die z.B. als Ladeschaufel eines Frontladers an einem Ackerschlepper oder Radlader (EP 2 204 088 A1, DE 299 20 834 U1) oder als Silofräse mit Gebläse und Auswurfkrümmer (DE 2 225 783 A) getrennt vom Futtermischwagen ausgeführt sein kann, oder die fest mit dem Futtermischwagen gekoppelt ist.

Im Stand der Technik erfolgt eine automatisch oder halbautomatisch (d.h. mit Anweisungen an einen Bediener) durchgeführte Beladung des Futtermischwagens, d.h. die Inhaltsstoffgehalte des jeweiligen, an einer zugehörigen Lagerstelle aus einem Vorrat entnommenen Bestandteils des Futters werden sensorisch erfasst, insbesondere mittels eines Nahinfrarot- (NIR-) Spektrometers, und abhängig vom Inhaltsstoffgehalt und einer vorgegebenen Rezeptur wird mittels einer Aufnahmeeinrichtung (Fräse o. dgl.) eine vorgegebene Menge (Masse oder Volumen) des Bestandteils aus dem Vorrat entnommen und mittels eines Förderers in den Futtermischwagen eingefüllt, sodass das Futter die gewünschten Mengen an Inhaltsstoffen enthält (EP 1 563 725 A1, EP 1 577 663 A1, WO 2005/067704 A1, DE 10 2010 033 888 A1). Diese selbstfahrenden, bemannten oder unbemannten Futtermischwagen können selbsttätig anhand einer Navigationseinrichtung zu abgespeicherten Positionen geleitet werden, an denen sie das Futter aufnehmen (DE 10 2018 100 534 A1, DE 10 2016 224 294 A1, DE 10 2014 116 882 A1, DE 10 2012 107 508 B3). Zudem kann der selbstfahrende, unbemannte Futtermischwagen mit einem Bildverarbeitungssystem ausgestattet sein, um eventuelle Hindernisse zu erkennen und zu umfahren (KR 10 2023 045 332 A), oder um das aufzunehmende Futter zu erkennen (KR 10 2020 063 326 A1).

Im Falle einer Beladung des Futtermischwagens durch ein separates Beladefahrzeug mit einer Ladeschaufel wurde vorgeschlagen, dass der Bediener des Futtermischwagens den Fahrer des (oder eines ausgewählten) Beladefahrzeugs durch entsprechende Kommunikationseinheiten über das aufzunehmende Futter informiert (EP 2 204 088 A1). Das Beladefahrzeug ist mit einer Navigationseinheit versehen und an der Lagerstelle, an welcher das Futter aufzunehmen und deren Position bekannt ist, erfolgt ein Vergleich, ob das Beladefahrzeug mit dem richtigen Futter beladen wurde. Der Fahrer des Beladefahrzeugs ist jedoch dafür verantwortlich, zur richtigen Aufnahmestelle des Futters zu fahren und es zum Futtermischwagen zu verbringen. Er wird lediglich gewarnt, wenn er nicht zur richtigen Stelle für die Futterentnahme gefahren ist. Die nachveröffentlichte DE 10 2022 104 049 A1 beschreibt eine Beladung eines Futtermischwagens mittels eines separaten, mit einer Häckseleinrichtung versehenen Fahrzeugs, welches das Futter durch einen Auswurfkrümmer in den Futtermischwagen überlädt, wobei die Ansteuerung des Auswurfkrümmers, ähnlich wie beim Überladen von Erntegut von einem Feldhäcksler auf einen Transportanhänger auf einem Feld, basierend auf den erfassten Positionen des Futtermischwagens und der Häckseleinrichtung vorgenommen wird.

In der als gattungsbildend angesehenen EP 3 242 550 B1 wird ein Futtermischwagen mittels eine Futtervorbereitungsgeräts befüllt, das entlang einer Schiene fährt, Futter gemäß einer Vorgabe aus einem Vorrat entnimmt und in den Futtermischwagen entlädt.

### Aufgabe

Nach alledem ist erkennbar, dass selbstfahrende Futtermischwagen das Futter selbsttätig aufnehmen, mischen und auch an die Tiere verfüttern können. Die Aufnahme des Futters in den Futtermischwagen durch dessen Aufnahme- und Fördervorrichtung ist jedoch relativ zeitraubend. Um den Futtermischwagen effektiver nutzen zu können, ist eine Befüllung durch ein separates Beladefahrzeug zeitsparender, sodass in größeren Betrieben Radlader oder Ackerschlepper mit Frontladern zur Beladung des Futtermischwagens verwendet werden. Hier ist jedoch, neben einer Überprüfung, ob die Futterentnahme an der richtigen Stelle erfolgt (EP 2 204 088 A1), bisher keinerlei Automatisierung oder Hilfestellung für den Bediener vorgesehen, abgesehen von dem einzigen, entlang einer Schiene fahrenden Futtervorbereitungsgerät nach EP 3 242 550 B1. Das ist besonders in dem Fall problematisch, wenn in größeren "Futterküchen" zur Beschleunigung des Ladevorgangs ein Futtermischwagen durch mehrere Beladefahrzeuge gleichzeitig beladen wird, da diese möglichst effektiv und ohne Kollisionen arbeiten sollten.

Es ist eine Aufgabe der vorliegenden Erfindung, ein gegenüber dem Stand der Technik verbessertes Verfahren zur Befüllung eines Futtermischwagens bereitzustellen, bei dem die oben erwähnten Nachteile nicht oder in einem verminderten Maße vorliegen.

### Lösung

Diese Aufgabe wird durch die Lehre des Anspruchs 1 gelöst, wobei die untergeordneten Ansprüche vorteilhafte Ausführungsformen beschreiben.

Ein Verfahren zur Befüllung eines Futtermischwagens durch ein (erstes) Beladefahrzeug sieht vor, dass das Beladefahrzeug durch ein Kontrollsystem derart kontrolliert wird, dass es selbsttätig zu einem Futterlager fährt, am Futterlager aus einer oder mehreren Lagerstellen nach einem vorgegebenen Rezept selbsttätig Futter entnimmt, selbsttätig zum Futtermischwagen fährt und das aufgenommene Futter selbsttätig in den Futtermischwagen entlädt.

Es wird demnach eine komplette Automatisierung des Beladens des Futtermischwagens durch ein (erstes) Beladefahrzeug vorgeschlagen, die einen Bediener des Beladefahrzeugs entlastet oder ersetzt. Eine Bedienerstation für das Beladefahrzeug kann somit entfallen, solange das Beladefahrzeug nicht noch andere, nicht automatisierte Aufgaben erfüllen soll.

Um die Befüllung des Futtermischwagens zu beschleunigen, ist ein zweites Beladefahrzeug vorgesehen, das ebenfalls mit einem Kontrollsystem ausgestattet ist, welches das zweite Beladefahrzeug derart kontrolliert, dass es selbsttätig zum Futterlager fährt, am Futterlager aus einer oder mehreren Lagerstellen nach einem vorgegebenen Rezept selbsttätig Futter entnimmt, selbsttätig zum Futtermischwagen fährt und das aufgenommene Futter selbsttätig in den Futtermischwagen entlädt. Nötigenfalls könnte auch entsprechendes, drittes (und ggf. viertes etc.) Beladefahrzeug vorgesehen sein.

Das Kontrollsystem des ersten und ggf. Beladefahrzeuges kann mit einem Server in Verbindung stehen, von dem es sein Rezept erhält. Der Server kann zudem von einem Kontrollsystem eines Zugfahrzeugs des Futtermischwagens eine Information hinsichtlich der Position des zu beladenden Futtermischwagens erhalten und eine Planung der Futtermengen, Wege und der zugehörigen Zeiten für die Beladefahrzeuge durchführten und an die Beladefahrzeuge übersenden, die sich entsprechend ihrer empfangenen Weg- und Zeitpläne bewegen, die benötigten Mengen an Futter aufnehmen, transportieren und auf dem Futtermischwagen ablegen und eventuelle Abweichungen an den Server zurückmelden, der daraufhin die Weg- und Zeitpläne anpasst. Die Planung der Weg- und Zeitpläne kann durch den Server im Sinne einer Optimierung der beim Befüllen des Futtermischwagens zurückgelegten Wege und/oder dafür benötigten Zeiten erfolgen. Es ist somit möglich, dass beide Transportfahrzeuge Ladungen desselben Futters zum Futtermischwagen tragen, insbesondere falls das Rezept mehr Futter erfordert als ein einziges Transportfahrzeug tragen kann.

Die Kontrollsysteme der Beladefahrzeuge können mit Positionsbestimmungsmitteln und visuellen Sensoren ausgestattet sein. Die Kontrollsysteme können somit die Beladefahrzeuge anhand der Weg- und Zeitpläne und der fusionierten Signale der Positionsbestimmungsmittel und visuellen Sensoren lenken. Insbesondere können die Kontrollsysteme anhand der Signale der visuellen Sensoren eventuelle Hindernisse im Weg der Beladefahrzeuge erkennen und an den Server weiterleiten, der darauf basierend den Weg- und Zeitplan eines oder beider Beladefahrzeuge anpasst.

Zudem können die Kontrollsysteme die Aufnahme und/oder Abgabe des Futters anhand der Signale der Positionsbestimmungsmittel und/oder visuellen Sensoren kontrollieren. Hierbei können die Kontrollsysteme bei einer ersten Aufnahme von Futter durch die Positionsbestimmungsmittel zur Lagerstelle des durch das Rezept vorgegebenen Futters geführt werden, dort anhand der visuellen Sensoren das Aussehen des Futters lernen und bei einer nachfolgenden Aufnahme das jeweilige Futter anhand des gelernten Aussehens erkennen und das Kontrollsystem des Beladefahrzeugs zum durch das Rezept vorgegebenen Futter leiten.

### Ausführungsbeispiel

Diese und andere Aufgaben, Merkmale und Vorteile der vorliegenden Erfindung werden dem Fachmann nach dem Lesen der folgenden detaillierten Beschreibung und angesichts der Zeichnungen offensichtlich.
- Fig. 1: ist eine Draufsicht auf eine Beladestation, in der ein Futtermischwagen durch Beladefahrzeuge beladen wird.
- Fig. 2: zeigt ein Schema für das Kontrollsystem der Beladefahrzeuge.
- Fig. 3: zeigt ein Beladefahrzeug bei der Aufnahme von Futter.
- Fig. 4: zeigt die Ansicht nach Figur 1 mit einem Hindernis.
- Fig. 5: zeigt ein Diagramm zum zeitlichen Ablauf des Beladevorgangs.
- Fig. 6: zeigt ein weiteres Diagramm, bei dem aufgrund eines Hindernisses eine Umplanung der Wege der Beladefahrzeuge erfolgt.

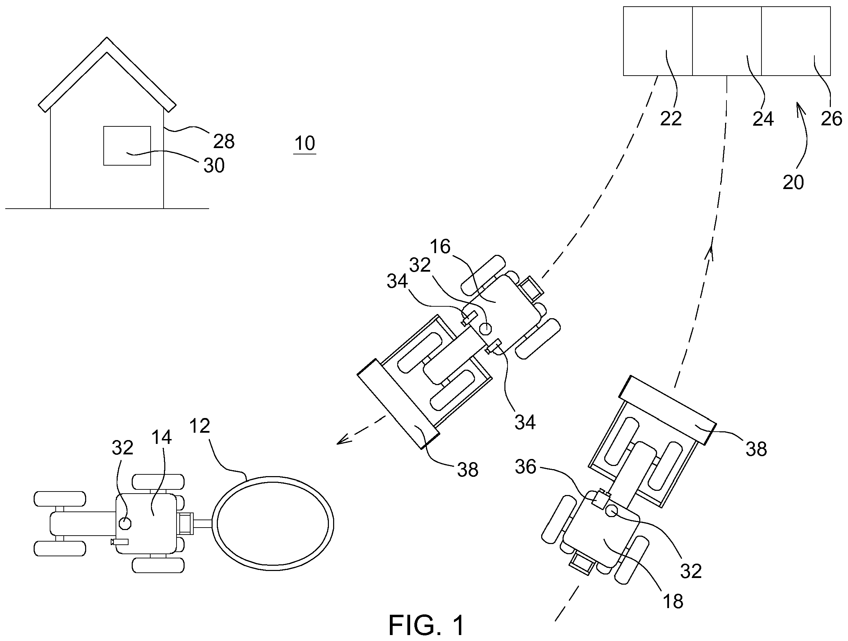

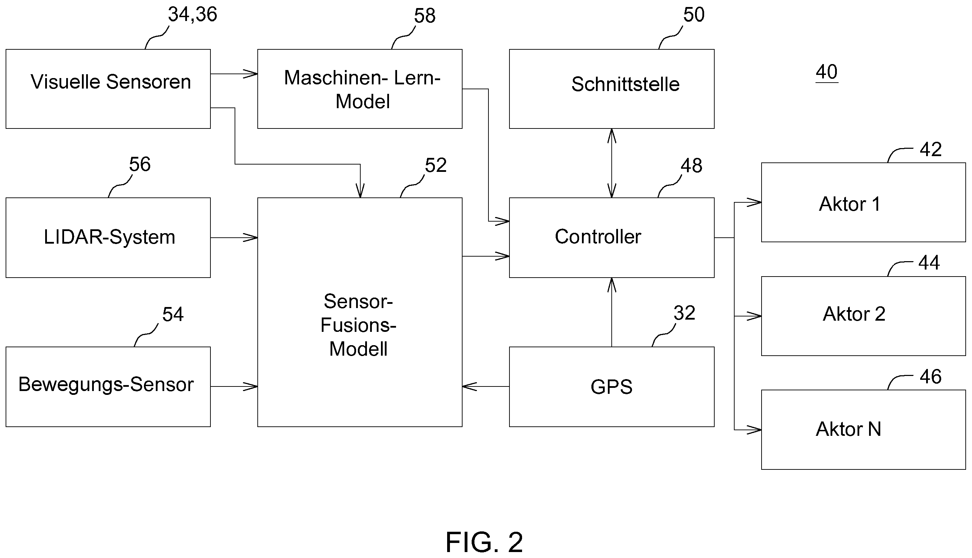

Die Figur 1 zeigt eine Beladestation 10, an der ein Futtermischwagen 12 durch zwei Beladefahrzeuge 16 und 18 gleichzeitig beladen wird. Die Beladefahrzeuge 16, 18 sind als selbstfahrende Ackerschlepper ausgeführt und umfassen jeweils einen Frontlader 38, mit dem sie aus einem Futterlager 20, das unterschiedliche Lagerstellen 22, 24, 26 umfasst, an denen unterschiedliche Arten von Futter, wie Silage, Heu, Baumwollsaat oder Mandelhüllen lagern, nacheinander vorbestimmte Futtermengen entnehmen und in den Futtermischwagen 12 einfüllen. Der Futtermischwagen 12 wird durch ein Zugfahrzeug 14 gezogen, welches hier ebenfalls als selbstfahrender Ackerschlepper ausgeführt ist. Das Zugfahrzeug 14 des Futtermischwagens 12 und die Beladefahrzeuge 16, 18 sind jeweils mit Navigationseinheiten 32 versehen und ihre Kontrollsysteme 40 (s. Figur 2) kommunizieren mit einem Server 30, der sich an einer beabstandeten Stelle 28 befindet, obwohl dessen Aufgaben auch von einem oder mehreren der Kontrollsysteme 40 der Fahrzeuge 14 bis 18 übernommen werden könnten. Eines der Beladefahrzeuge 16 ist im gezeigten Beispiel mit zwei nach vorn blickenden (Mono-) Kameras 34 versehen und das andere der Beladefahrzeuge 18 mit einer nach vorn blickenden (Stereo-) Kamera 36.

Zumindest die Beladefahrzeuge 16 und 18 können vollautomatisch und somit unbemannt arbeiten, obwohl auch denkbar wäre, dass sie lediglich mit Anzeigeeinrichtungen oder anderen Schnittstellen versehen sind, um einem Bediener Lenk- und Geschwindigkeitsanweisungen und Hinweise zur Bedienung des Frontladers 38 geben können. Das Zugfahrzeug 14 des Futtermischwagens 12 könnte auch automatisiert und unbemannt arbeiten. Im einfachsten Fall kann es jedoch durch einen Bediener gesteuert werden.

In der Figur 2 ist ein Kontrollsystem 40 der Beladefahrzeuge 16, 18 schematisch dargestellt. Es umfasst eine Steuerung 48, die eine Reihe an Aktoren 42, 44, 46 direkt oder indirekt (d.h. über zugehörige Regelungen) kontrolliert, welche beispielsweise die Geschwindigkeit, den Lenkwinkel und die Höhe und Neigung des Frontladers 38 des Beladefahrzeugs 16, 18 vorgeben.

Die Steuerung 48 ist zudem mit der Navigationseinheit 32 verbunden. Die Navigationseinheit 32 ist zum Empfang von Signalen eines satellitenbasierten Navigationssystems (GNSS, wie GPS, Galileo etc.) eingerichtet. Die Navigationseinheit 32 kann mit einem Empfänger zum Empfang von Korrektursignalen eines entsprechenden Systems (DGPS, RTK) zur Verbesserung der Präzision der Signale des Navigationssystems verbunden sein. Die Signale der Navigationseinheit 32 werden einem Sensorfusionsmodell 52 zugeführt, das weiterhin mit einem Bewegungssensor 54 verbunden ist, um die Genauigkeit der Positionssignale insbesondere bei ungünstigen Empfangsbedingungen zu verbessern. Der Bewegungssensor 54 kann ein Trägheitsnavigationssystem und/oder odometrische Sensoren umfassen, welche die Lenkrichtung und Bewegung der Vorderräder der Beladefahrzeuge 16, 18 erfassen, d.h. einem Lenkwinkelsensor und einem Drehzahlsensor zur Erfassung der Drehung der Vorderräder. Die odometrisch erfassten Signale werden üblicherweise durch das Sensorfusionsmodell 52 mit denen des Trägheitsnavigationssystems und der satellitenbasierten, ggf. korrigierten Signale verschmolzen, z.B. durch einen Kalman-Filter.

Dem Sensorfusionsmodell 52 werden zudem die Signale der Kamera 34 oder 36 zugeführt und ggf. von einem optionalen Lidar-System 56.

Demnach sind die Kontrollsysteme 40 mit visuellen Sensoren 34, 36 und 56 ausgestattet, sowie mit Positionsbestimmungsmitteln (Navigationseinheit 32, Bewegungssensor 54) zur Bestimmung der Position und ggf. Richtung des Beladefahrzeugs 16, 18. In an sich bekannter Weise werden die Signale der visuellen Sensoren 34, 36, 56 und der Positionsbestimmungsmittel miteinander verschmolzen, um das Beladefahrzeug 16, 18 einerseits zum Futterlager 20 zu lenken und dort den Frontlader 38 zu befüllen und andererseits zum Futtermischwagen 12 zu lenken und dort das Futter abzuladen.

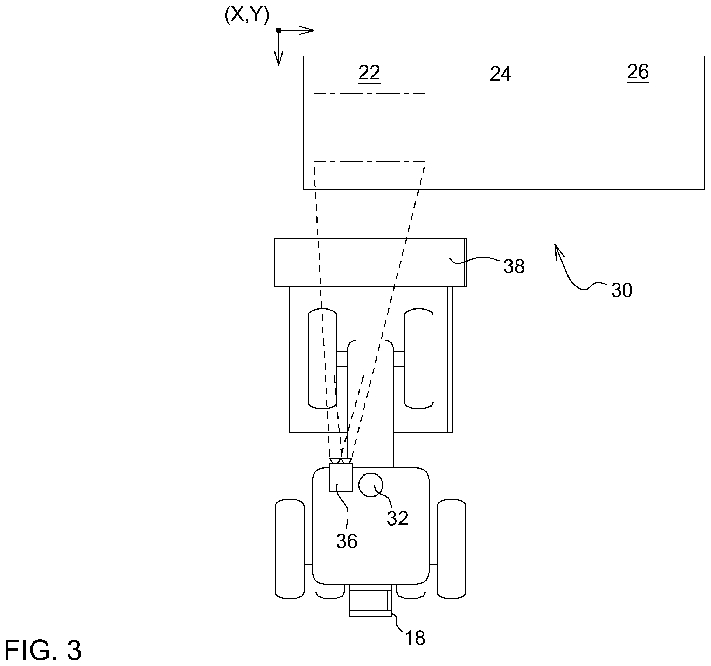

Ein Maschinenlernmodell 58 der Kontrollsysteme 40 ermöglicht ein Lernen des aufzunehmenden Futters durch die visuellen Sensoren 34, 36, 56. Hierzu kann das Beladefahrzeug 16, 18, wie in Figur 3 gezeigt, anhand der Positionsbestimmungsmittel zu einer der Lagerstellen 22 bis 26 geführt werden, an der das durch das Rezept vorgegebene Futter liegt. Dort wird durch die visuellen Sensoren 34, 36, 56 das dort liegende Futter erfasst und durch das Maschinenlernmodell gelernt. Beim nächsten Beladevorgang ist das Kontrollsystem 40 in der Lage, das Futter selbsttätig zu erkennen. Wenn an einer Lagerstelle 22 bis 26 demnach anderes Futter gelagert wird als zuvor, ist das Kontrollsystem 40 demnach in der Lage, dies zu erkennen, an den Server 30 zu melden, damit er diesen Sachverhalt in die Weg- und Zeitplanung aufnehmen kann, und das betroffene Kontrollsystem 40 kann das zugehörige Beladefahrzeug 16, 18 derart kontrollieren, dass es das jeweils gewünschte Futter an einer anderen, korrekten Lagerstelle 22 bis 26 aufnimmt.

Bei einer möglichen Ausführungsform könnte demnach die Führung des Beladefahrzeugs 16, 18 vom Futtermischwagen 12 bis kurz vor das Futterlager 20 anhand des vom Server vorgegebenen Weg- und Zeitplans erfolgen und ab dort eine nur auf den visuellen Sensoren 34, 36 und/oder 56 basierende Führung des Beladefahrzeugs 16, 18 zur Lagerstelle 22, 24, 26 erfolgen und auch die Beladung des Frontladers 38 anhand der visuellen Sensoren 34, 36, 56 erfolgen.

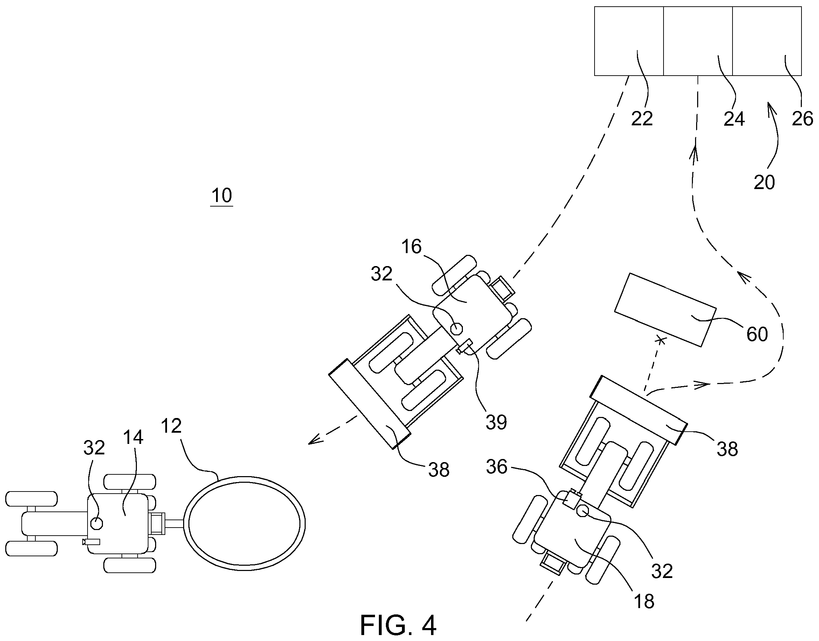

Die visuellen Sensoren 34, 36, 56 ermöglichen zudem, eventuelle Hindernisse 60, vgl. Figur 4, auf ihren Wegen zu erkennen und zu umfahren.

Die Steuerungen 48 der Kontrollsysteme 40 der Beladefahrzeuge 16, 18 sind zudem mit einer Schnittstelle 50 verbunden, über welche sie drahtlos und bidirektional mit dem Server 30 kommunizieren.

Das Zugfahrzeug 14 des Futtermischwagens 12 ist ebenfalls mit einem Kontrollsystem 40 ausgestattet. Im einfachsten Fall, in dem es durch einen Bediener gesteuert wird, kann ein Kontrollsystem 40 gemäß Figur 2 verwendet werden, bei dem jedoch die visuellen Sensoren 34, 36, 56 entfallen können, wie auch das Maschinenlernmodell 58 und die Ansteuerung der Aktoren 42 bis 46, sodass lediglich die Steuerung 48, die Navigationseinheit 32, der Bewegungssensor 54 und das Sensorfusionsmodell 52 sowie die Schnittstelle 50 verbleiben. Dadurch kann die Position des Zugfahrzeugs 14 bzw. die daraus abgeleitete Position des Futtermischwagens 12 an den Server 30 weitergeleitet werden. Diese Position wird vom Server 30 benötigt, um für die Beladefahrzeuge 16, 18 jeweils einen Weg- und Zeitplan zu erstellen, nach welchem sie Futtermischwagen 12 automatisch beladen. Um die Bestimmung der Position des Futtermischwagens 12 zu vereinfachen kann auf dem Futtermischwagen 12 eine Navigationseinheit 38 bereitgestellt werden, was eine Umrechnung der Position des Zugfahrzeugs 14 in jene des Futtermischwagens 12 einspart.

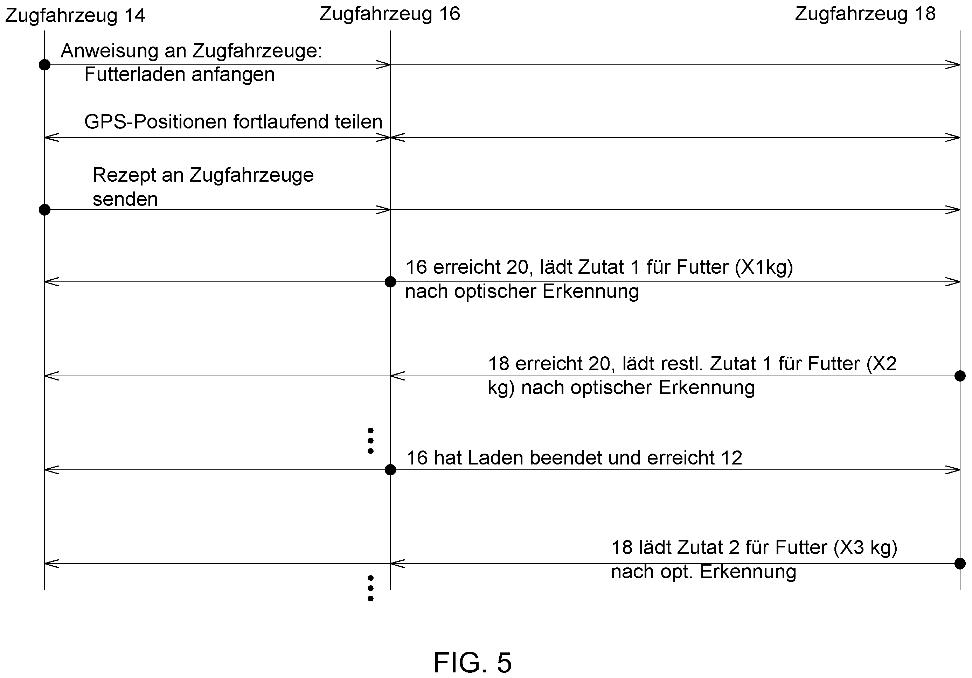

Die Figur 5 zeigt ein Diagramm für ein Verfahren, nach welchem die Beladung des Futtermischwagens 12 erfolgen kann. Die Beladefahrzeuge 16, 18 erhalten demnach vom Server 30 (insbesondere von einer beauftragten Person, die mit dem Server 30 über Kommunikationsmittel in Verbindung steht, oder einer auf dem Server 30 laufenden Software) den Auftrag, den Futtermischwagen 12 zu befüllen. Die Beladefahrzeuge 16, 18 und das Zugfahrzeug 14 teilen dem Server 30 ihre Positionen mit und erhalten jeweils eine ihnen zugeordnete Vorgabe (Rezept) für das aufzunehmende Futter. Die Kontrollsysteme 40 beider Beladefahrzeuge 16, 18 erhalten jeweils eine insbesondere hinsichtlich des zurückzulegenden Wegs- und/oder der benötigten Zeit optimierte, ihnen zugeordnete Weg- und Zeitplanung vom Server 30 und bewegen sich entsprechend dieser Weg- und Zeitplanung, um möglichst effektiv und ohne Kollisionsgefahr zur Futterstation 20 zu fahren, an der jeweiligen Beladestation 22 bis 26 die vom Server 30 vorgegebene Menge des Futters aufzunehmen, und zum Futtermischwagen 12 zurückzufahren und das Futter zu entladen. Dabei können die aufgenommen Futtermengen und -inhaltsstoffe durch geeignete Sensoren an den Frontladern 38 und ggf. durch die visuellen Sensoren 34, 36, 56 erfasst werden. Nötigenfalls müssen die Beladestationen 22 bis 26 mehr als einmal angefahren werden, um die vorgesehenen Futtermengen aufzunehmen. Eventuelle Abweichungen vom Weg- und Zeitplan werden durch die Kontrollsysteme 40 der Beladefahrzeuge 16, 18 sofort dem Server 30 mitgeteilt, der nötigenfalls die Weg- und Zeitpläne revidiert.

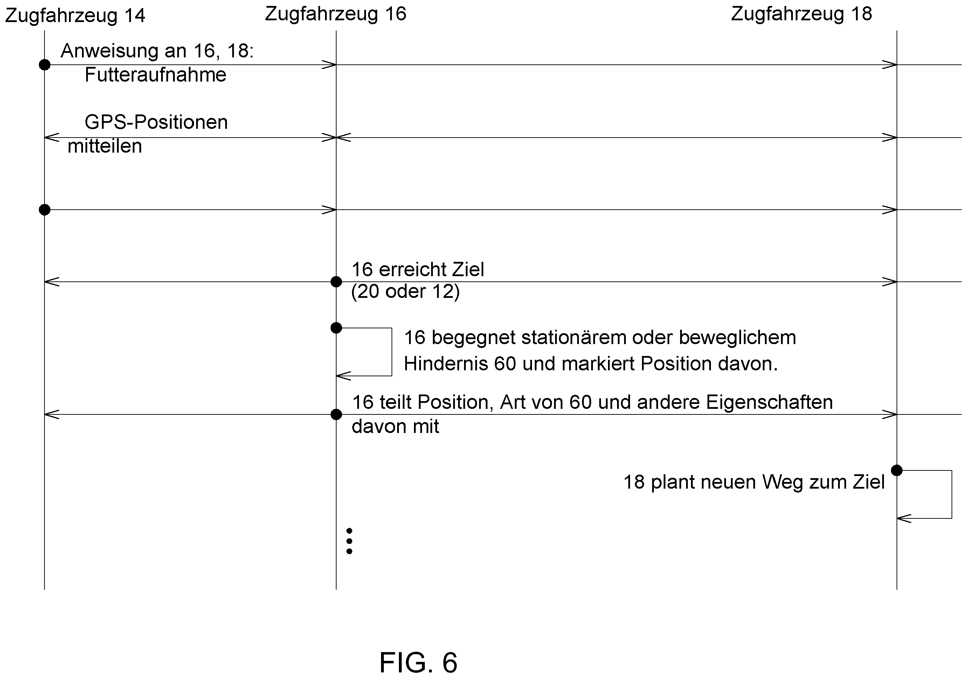

Wenn auf dem Weg der Beladefahrzeuge 16, 18 ein Hindernis 60 erkannt werden sollte, wird die Position und ggf. Bewegungsrichtung und -geschwindigkeit des Hindernisses 60 dem Server 30 mitgeteilt, wie in den Figuren 4 und 6 gezeigt. Dieser wird nötigenfalls die Weg- und Zeitpläne für die Beladefahrzeuge 16, 18 anpassen, um eine Kollision mit dem Hindernis 60 zu vermeiden.

Es sei noch angemerkt, dass der Server 30, dessen Aufgaben auch von einem oder mehreren der Kontrollsysteme 40 der Fahrzeuge 14 bis 18 übernommen werden könnten, gemäß der vorangehenden Beschreibung den Fahrzeugen 16 und 18 die jeweiligen Weg- und Zeitpläne einschließlich der aufzunehmenden Futtermengen vorgibt, d.h. es wird eine hierarchische Vorgehensweise gewählt, in welcher der Server 30 den Fahrzeugen 16, 18 die Vorgaben macht. Der Server 30 benötigt dazu eine Vielzahl an Informationen, nicht nur hinsichtlich der Betriebsparameter der Fahrzeuge 16, 18 (z.B. maximales Ladegewicht, Lenkradius), sondern auch hinsichtlich ihrer aktuellen Position und Beladungszustands sowie der Positionen des Zugfahrzeugs 14, die sich ggf. während des Beladens auch ändern kann, und der Beladefahrzeuge 16, 18. Hierbei kann auch ein Lernvorgang vorgesehen sein, in welchem ein erster Beladevorgang manuell erfolgt und der Server 30 die entsprechenden Daten lernt und abspeichert.

Die Planung der Weg- und Zeitpläne einschließlich der aufzunehmenden Futtermengen kann analog zur Vorgehensweise während eines Erntevorgangs erfolgen, wobei der Futtermischwagen 12 anstelle einer Erntemaschine tritt und die Beladefahrzeuge 16, 18 die Rolle der Transportfahrzeuge für das Erntegut übernehmen, hier jedoch für den Transport der Futterbestandteile zum Futtermischwagen. Ein derartiges (hierarchisches) Planungssystem, bei dem ein zentraler Rechner Anweisungen an Fahrzeuge gibt, ist beispielsweise in D. Bochtis et al., Field Operations Planning for Agricultural Vehicles: A Hierarchical Modeling Framework, Agricultural Engineering International: the CIGR Ejournal. Manuscript PM 06 021. Vol. IX. February, 2007 beschrieben. Es sind auch kooperative Vorgehensweisen denkbar, bei denen jedes der Beladefahrzeuge 16, 18 ein Gebot abgibt und ein Auktionator es annimmt oder ablehnt (vgl. Dias, M. B. und Stentz, A., A Market Approach to Multirobot Coordination, CMU-RI-TR-01-26, The Robotics Institute, Carnegie Mellon University, Pittsburgh, Pennsylvania, USA, August 2001).

Im Unterschied zur Planung der Transportkette beim Erntevorgang, bei welcher es vor Allem darauf ankommt, dass die Transportfahrzeuge rechtzeitig bereitstehen, um Erntegut zu übernehmen und eine unerwünschte Unterbrechung des Erntevorgangs zu vermeiden, geht es bei dem hier beschriebenen Beladevorgang des Futtermischwagens 12 in erster Linie darum, die "Choreographie" der Beladefahrzeuge 16, 18 in der Weise zu optimieren, dass sich die beiden Beladefahrzeuge 16, 18 möglichst wenig gegenseitig stören. Wenn beispielsweise der Futtermischwagen 12 von beiden Beladefahrzeugen 16, 18 von einer einzigen Seite her befüllt wird, d.h. von links oder rechts, kann es sinnvoll sein, die Beladefahrzeuge 16, 18 durch die Weg- und Zeitplanung des Servers 30 so zu synchronisieren, dass jeweils eines der Beladefahrzeuge 16, 18 das Futter aufnimmt und das andere der Beladefahrzeuge 18, 16 das Futter in den Futtermischwagen 12 ablädt. Die Beladefahrzeuge 16, 18 würden sich dann auf dem Weg zum Futtermischwagen 12 bzw. zur Futterstation 20 begegnen und sich weder beim Aufnehmen noch beim Abgeben des Futters gegenseitig stören. Wenn die Beladung des Futtermischwagens 12 von beiden Seiten erfolgt, erübrigt sich eine derartige Synchronisation.

## Patentansprüche

1. Verfahren zur Befüllung eines Futtermischwagens (12) durch ein erstes Beladefahrzeug (16), das mit einem Kontrollsystem (40) ausgestattet ist, welches das erste Beladefahrzeug (16) derart kontrolliert, dass es selbsttätig zu einem Futterlager (20) fährt, am Futterlager (20) aus einer oder mehreren Lagerstellen (22, 24, 26) nach einem vorgegebenen Rezept selbsttätig Futter entnimmt, selbsttätig zum Futtermischwagen (12) fährt und das aufgenommene Futter selbsttätig in den Futtermischwagen (12) entlädt, **dadurch gekennzeichnet, dass** ein zweites Beladefahrzeug (18) mit einem Kontrollsystem (40) ausgestattet ist, welches das zweite Beladefahrzeug (18) derart kontrolliert, dass es selbsttätig zum Futterlager (20) fährt, am Futterlager (20) aus einer oder mehreren Lagerstellen (22, 24, 26) nach einem vorgegebenen Rezept selbsttätig Futter entnimmt, selbsttätig zum Futtermischwagen (12) fährt und das aufgenommene Futter selbsttätig in den Futtermischwagen (12) entlädt.

2. Verfahren nach Anspruch 1, wobei die Kontrollsysteme (40) der Beladefahrzeuge mit einem Server (30) in Verbindung stehen, von dem sie ihre Rezepte erhalten.

3. Verfahren nach Anspruch 2, wobei der Server (30) von einem Kontrollsystem (40) eines Zugfahrzeugs (14) des Futtermischwagens (12) eine Information hinsichtlich der Position des zu beladenden Futtermischwagens (12) erhält.

4. Verfahren nach Anspruch 3, wobei der Server (30) eine Planung der Mengen des Futters, der Wege und der zugehörigen Zeiten für die Beladefahrzeuge (14, 16) im Sinne einer Optimierung der beim Befüllen des Futtermischwagens (12) zurückgelegten Wege und/oder dafür benötigten Zeiten durchführt und an die Beladefahrzeuge (14, 16) übersendet, die sich entsprechend ihrer empfangenen Weg- und Zeitpläne bewegen und das benötigte Futter aufnehmen, transportieren und auf dem Futtermischwagen (12) abladen und eventuelle Abweichungen an den Server (30) zurückmelden, der daraufhin die Weg- und Zeitpläne anpasst.

5. Verfahren nach Anspruch 4, wobei die Kontrollsysteme (40) der Beladefahrzeuge (16, 18) mit Positionsbestimmungsmitteln und visuellen Sensoren (34, 36, 56) ausgestattet sind.

6. Verfahren nach Anspruch 5, wobei die Kontrollsysteme (40) die Beladefahrzeuge (16, 18) anhand der Weg- und Zeitpläne und der fusionierten Signale der Positionsbestimmungsmittel und visuellen Sensoren (34, 36, 56) lenken.

7. Verfahren nach Anspruch 6, wobei die Kontrollsysteme (40) anhand der Signale der visuellen Sensoren (34, 36, 56) eventuelle Hindernisse im Weg der Beladefahrzeuge (16, 18) erkennen und an den Server (30) weiterleiten, der darauf basierend den Weg- und Zeitplan eines oder beider Beladefahrzeuge (16, 18) anpasst.

8. Verfahren nach Anspruch 5, wobei die Kontrollsysteme (40) die Aufnahme und/oder Abgabe des Futters anhand der Signale der Positionsbestimmungsmittel und/oder visuellen Sensoren (34, 36, 56) kontrollieren.

9. Verfahren nach Anspruch 8, wobei die Kontrollsysteme (40) bei einer ersten Aufnahme von Futter durch die Positionsbestimmungsmittel zur Lagerstelle (22 bis 26) des durch das Rezept vorgegebenen Futters geführt werden, dort anhand der visuellen Sensoren (34 36, 56) das Aussehen des Futters lernen und bei einer nachfolgenden Aufnahme das jeweilige Futter anhand des gelernten Aussehens erkennen und das Kontrollsystem (40) des Beladefahrzeugs (16, 18) zum vorgegebenen Futter leiten.

## Claims

1. Method for filling a feed mixer (12) using a first loading vehicle (16) which is equipped with a control system (40) which controls the first loading vehicle (16) in such a way that it automatically moves to a feed store (20), automatically removes feed from the feed store (20) from one or more storage points (22, 24, 26) in accordance with a specified formulation, automatically moves to the feed mixer (12) and automatically unloads the collected feed into the feed mixer (12), **characterized in that** a second loading vehicle (18) is equipped with a control system (40) which controls the second loading vehicle (18) in such a way that it automatically moves to the feed store (20), automatically removes feed from the feed store (20) from one or more storage points (22, 24, 26) in accordance with a specified formulation, automatically moves to the feed mixer (12) and automatically unloads the collected feed into the feed mixer (12).

2. Method according to Claim 1, wherein the control systems (40) of the loading vehicles are connected to a server (30) from which they receive their formulations.

3. Method according to Claim 2, wherein the server (30) receives information relating to the position of the feed mixer (12) to be loaded from a control system (40) of a towing vehicle (14) of the feed mixer (12).

4. Method according to Claim 3, wherein the server (30) plans the quantities of the feed, the routes and the associated times for the loading vehicles (14, 16) for the purpose of optimizing the routes travelled during filling of the feed mixer (12) and/or times required for this and transmits the plans to the loading vehicles (14, 16) which move in accordance with their received route and time plans and collect the required feed, transport it and unload it onto the feed mixer (12) and report any deviations back to the server (30), which then adapts the route and time plans.

5. Method according to Claim 4, wherein the control systems (40) of the loading vehicles (16, 18) are equipped with position determining means and visual sensors (34, 36, 56).

6. Method according to Claim 5, wherein the control systems (40) steer the loading vehicles (16, 18) on the basis of the route and time plans and the merged signals from the position determining means and visual sensors (34, 36, 56).

7. Method according to Claim 6, wherein the control systems (40) identify any obstacles in the way of the loading vehicles (16, 18) on the basis of the signals from the visual sensors (34, 36, 56) and forward them to the server (30), which adapts the route and time plan for one or both of the loading vehicles (16, 18) based thereon.

8. Method according to Claim 5, wherein the control systems (40) control the collection and/or delivery of the feed on the basis of the signals from the position determining means and/or visual sensors (34, 36, 56).

9. Method according to Claim 8, wherein the control systems (40), during a first feed collection, are guided by the position determining means to the storage point (22 to 26) of the feed specified by the formulation, there learn the appearance of the feed on the basis of the visual sensors (34, 36, 56) and, during subsequent collection, identify the respective feed on the basis of the learned appearance and direct the control system (40) of the loading vehicle (16, 18) to the specified feed.

## Revendications

1. Procédé de remplissage d'un wagon mélangeur de fourrage (12) par un premier véhicule de chargement (16), qui est équipé d'un système de commande (40), lequel commande le premier véhicule de chargement (16) de telle sorte qu'il se rende automatiquement à un entrepôt de fourrage (20), qu'il prélève automatiquement du fourrage au niveau d'un ou de plusieurs points de stockage (22, 24, 26) dans l'entrepôt de fourrage (20) selon une recette prédéfinie, qu'il se rende automatiquement vers le wagon mélangeur de fourrage (12) et qu'il décharge automatiquement le fourrage prélevé dans le wagon mélangeur de fourrage (12), **caractérisé en ce qu'**un deuxième véhicule de chargement (18) est équipé d'un système de commande (40), lequel commande le deuxième véhicule de chargement (18) de telle sorte qu'il se rende automatiquement à l'entrepôt de fourrage (20), qu'il prélève automatiquement du fourrage au niveau d'un ou de plusieurs points de stockage (22, 24, 26) dans l'entrepôt de fourrage (20) selon une recette prédéfinie, qu'il se rende automatiquement vers le wagon mélangeur de fourrage (12) et qu'il décharge automatiquement le fourrage prélevé dans le wagon mélangeur de fourrage (12).

2. Procédé selon la revendication 1, dans lequel les systèmes de commande (40) des véhicules de chargement sont connectés à un serveur (30) en provenance duquel ils reçoivent leurs recettes.

3. Procédé selon la revendication 2, dans lequel le serveur (30) d'un système de commande (40) d'un véhicule tracteur (14) du wagon mélangeur de fourrage (12) reçoit des informations concernant la position du wagon mélangeur de fourrage (12) devant être chargé.

4. Procédé selon la revendication 3, dans lequel le serveur (30) effectue une planification des quantités de fourrage, des trajets et des temps associés pour les véhicules de chargement (14, 16) dans le sens d'une optimisation des trajets parcourus lors du remplissage du wagon mélangeur de fourrage (12) et/ou des temps nécessaires à cet effet, et transmet ladite planification aux véhicules de chargement (14, 16), lesquels se déplacent conformément à leurs plans de déplacement et de temps reçus, et prélèvent, transportent et déchargent le fourrage requis dans le wagon mélangeur de fourrage (12), et signalent d'éventuels écarts au serveur (30), lequel adapte ensuite les plans de déplacement et de temps.

5. Procédé selon la revendication 4, dans lequel les systèmes de commande (40) des véhicules de chargement (16, 18) sont équipés de moyens de détermination de position et de capteurs visuels (34, 36, 56).

6. Procédé selon la revendication 5, dans lequel les systèmes de commande (40) dirigent les véhicules de chargement (16, 18) sur la base des plans de déplacement et de temps et des signaux fusionnés provenant des moyens de détermination de position et des capteurs visuels (34, 36, 56).

7. Procédé selon la revendication 6, dans lequel les systèmes de commande (40) détectent, sur la base des signaux provenant des capteurs visuels (16, 18, 56), d'éventuels obstacles sur le trajet des véhicules de chargement (34, 36) et les transmettent au serveur (30), lequel adapte, sur cette base, le plan de trajet et de temps de l'un des deux véhicules de chargement (16, 18) ou des deux.

8. Procédé selon la revendication 5, dans lequel les systèmes de commande (40) commandent la réception et/ou le déchargement du fourrage sur la base des signaux provenant des moyens de détermination de position et/ou des capteurs visuels (34, 36, 56).

9. Procédé selon la revendication 8, dans lequel, lors d'un premier prélèvement de fourrage, les systèmes de commande (40) sont guidés par les moyens de détermination de position vers le point de stockage (22 à 26) du fourrage prédéfini par la recette, y apprennent l'aspect du fourrage au moyen des capteurs visuels (34, 36, 56) et, lors d'un prélèvement ultérieur, identifient le fourrage respectif sur la base de l'aspect appris et guident le système de commande (40) du véhicule de chargement (16, 18) vers le fourrage prédéfini.
